# EUROPEAN PATENT APPLICATION

(11) **EP 1 246 443 A1**
(43) Date of publication of application: **02.10.2002**
(21) Application number: 02076086.4
(22) Date of filing: 20.03.2002
(51) Int. Cl.: H04M 11/00, H04M 11/04

(54) **System for communicating with terminals at remote locations**

(30) Priority: 23.03.2001 NL 1017676
(71) Applicant: Pijnenburg Heating Controls B.V., 5261 NE Vught (NL)
(72) Inventor: Kuipers, Paulus Gerardus Martinus, 5262 XJ Vught (NL); Van Leeuwen, Willem Cornelis, 4261 LN Wijk en Aalburg (NL)
(74) Representative: Reynvaan, Lambertus Johannes

(57) **Abstract**

The present invention relates to a system for communicating with terminals (A, B) at remote locations (1), which uses the public telephone network (7, 8, 9) for communication between a central point (2) and any terminal at any location.

In order to set up the connection between the central point and any terminal via the public telephone network, the terminal can be connected to the telephone network through an intermediate gate circuit (4) installed at the location, in which gate circuit not only coding for the location, but also the telephone number of the central point is preprogrammed, and which gate circuit is opened when a start signal is transmitted by wireless means (11, 12, 13) from the central point to the location.

If terminals at other remote locations can be connected in a corresponding manner via the telephone network to one or more central points, a passive network is created.

Central heating installations, deep-freeze installations, copying machines and the like can be quoted as possible applications.

The application of the system according to the invention includes achieving savings in terms of preventive maintenance on the connected terminals.

## Description

The present invention relates to a system for communicating with terminals at remote locations

The object of the present invention is to produce a system of this type, which uses an existing connection facility, i.e. the public telephone network, via which the information is transmitted to the central point, in order to acquire information at a central point relating to the status and operation of terminals at remote locations.

Once the connection has been set up between the terminal and the central point, communication of data in both directions can begin via this network.

From the technical viewpoint, a telephone connection of this type can be set up between a central point and a terminal by both the central point and a terminal. However, it appears that the connection set-up from the central point causes undesirable complications, since the call signals from the central point to a terminal via the public telephone network will be no different for a subscriber than the call signals for an incoming call.

This complication is avoided in the system according to the present invention by ensuring that the connection via the public telephone network is always set up from the telephone connection on the terminal. This fundamental idea on which the invention is based is preferably to be implemented through wireless transmission of the start signal for the set-up of the required connection via the public telephone network from the central point to the terminal. A wireless one-way connection is therefore used to start, from the central point, the transmission of information from the terminal.

Therefore, in a system for communicating with terminals at remote locations, which uses the public telephone network for communication between a central point and any terminal at any location, this system is characterised according to the invention in that, in order to set up the connection between the central point and any terminal via the public telephone network, the terminal can be connected to the telephone network through an intermediate gate circuit installed at the location, in which gate circuit not only coding for the location, but also the telephone number of the central point is preprogrammed, and which gate circuit is opened when a start signal is transmitted by wireless means from the central point to the location.

A certain segregation is thus created between the path of the start signal from the central point to the location and the two paths for information exchange in the communication between the central point and the terminal. The signal which is transmitted by the central point via the wireless connection path to the location therefore merely serves as an instruction to set up a telephone connection via the gate circuit and via the public telephone network to the central point. As soon as the telephone connection is set up, the central point communicates in two directions with the terminal via the telephone connection.

The initiative for setting up the connection via the public telephone network always resides on the side of the telephone connection in the terminal at the location. The availability and priority of this connection are likewise determined by the telephone connection at the location. The system according to the invention also comprises a facility in each terminal for automatically signalling a fault in the terminal via the gate circuit to the central point. In this case, a start signal originating from the defective terminal itself is required in order to open the gate circuit.

The invention will be explained in detail below with reference to the attached drawings, in which:
Fig. 1 shows a schematic representation of a possible design of the system according to the invention;
Fig. 2 shows a schematic representation of a different design of the system according to the invention;

In the figures, the same reference numbers are used for matching parts and components which perform similar functions, even if the components and parts have a slightly different representation.

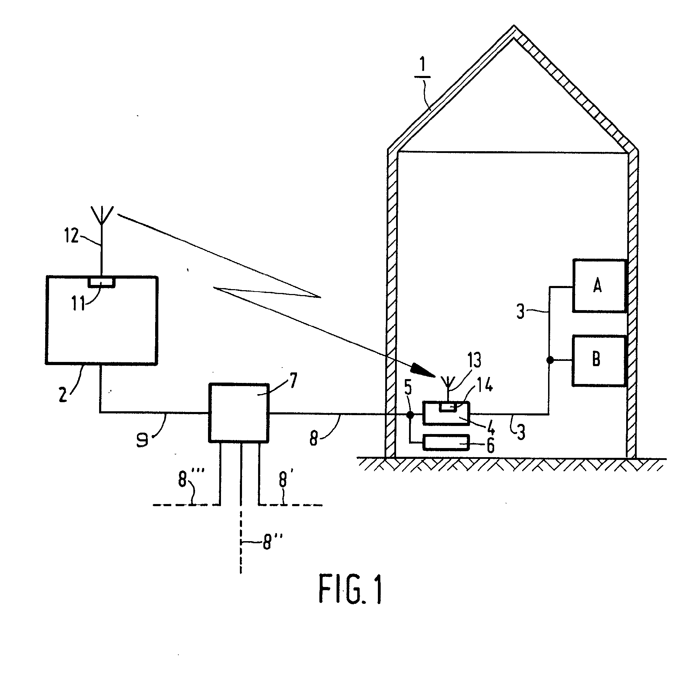

Reference number 1 in Fig. 1 shows a location, for example a building, in which a number of terminals are located. Only two terminals are drawn in this figure, indicated as A and B, but in principle the number is not restricted to two.

The system according to the invention is intended to create a facility for remote monitoring and, if possible, control of these terminals, but also, and above all, to initiate transmission of signals from the terminals themselves relating to the status and operation of the terminals in the direction of a central point, indicated by reference number 2. This central point 2 may be designed as a monitoring and control centre. In order to achieve the aforementioned object, the terminals, in this figure terminal A and terminal B respectively, are initially connected via an internal communications line 3 to the input of a gate circuit 4 which is similarly present at the location. The output 5 of this gate circuit 4 is connected to the public telephone network, as is the telephone or telephone exchange 6 of the building 1.

The telephone network normally contains one or more telephone exchanges, one of which is indicated with reference number 7 for the sake of completeness of the representation, with the schematically drawn part of the telephone network between the telephone connection 5 of the building 1 and the telephone exchange.

A plurality of connection lines, indicated by 8', 8", 8''', with other locations (not shown) associated with the present system and located elsewhere with terminals (not shown) can be connected to the telephone exchange 7 of the public telephone network (8). A telephone connection (subscriber line) 9 runs from the telephone exchange 7 to the central point 2.

The aforementioned central point 2 is equipped with a radio-frequency transmission installation 11 and carries an RF transmission antenna 12 connected thereto in order to transmit an RF start signal in the direction of the location 1.

For reception thereof, the gate circuit 4 in Fig. 1 is equipped with an RF reception antenna 13 tuned to the frequency of the RF transmitter 11, by which the received signal is processed in a stage 14 connected thereto. Not only a coding of the location, but also the telephone number of the central point 2 is preprogrammed in the gate circuit 4.

The system described with reference to Fig. 1 operates as follows:

In the event of a fault in one of the terminals connected to the gate circuit 4 (i.e. terminal A or B in the example shown in Fig. 1), the terminal concerned, for example terminal B, generates a signal associated with this terminal which passes via the internal communications line 3 to the gate circuit 4, which it causes to open and, using the number of the central point 2 preprogrammed therein, to make contact with said central point. The gate circuit 4 thus connects the defective terminal (B) via the public telephone network 8 and the telephone exchange 7 included therein to the input of the central point, e.g. a monitoring and control centre, to be processed therein. There, with the aid of the code which is also transmitted, the location of the defective terminal can be identified, along with the terminal involved (in this case B), and the type of fault which has been reported. Possible measures can then be taken from this centre in order to clear the fault.

The invention offers an essentially much more important facility whereby the status and operation of any terminal can be periodically interrogated. This is in fact particularly useful and appropriate in terms of preventive maintenance, and the system according to the invention is particularly beneficial if more terminals are involved in the present system.

To this end, for periodic interrogation from the central point 2, an RF start signal is transmitted by the RF transmitter 11 and the RF transmission antenna 12 in the direction of the location 1, where this start signal is received by the RF reception antenna 13 and is then translated by the stage 14 into a command to the gate circuit 4 to open. The gate circuit 4, with the aid of the preprogrammed telephone number, then seeks a connection with the central point 2, whereafter the exchange of information between the central point 2 and one or both terminals (A and B) can begin via the public telephone network.

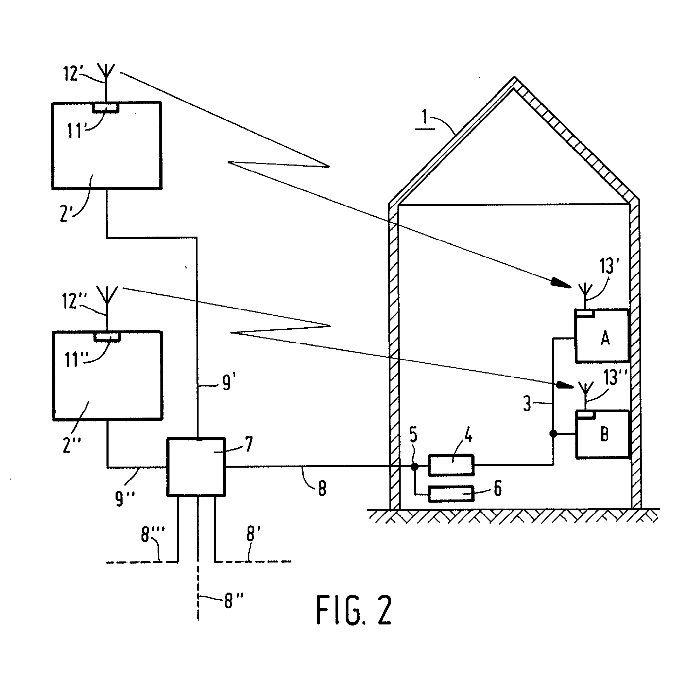

Fig. 2 shows a modification of the system according to the present invention, taking into account the basic principle explained with reference to Fig. 1.

At the location, building 1, there are again, for example, two terminals A and B. These terminals are connected in the same way as described in Fig. 1 via an internal communications line 3 to the input of the gate circuit 4. The output 5 of the gate circuit 4 is again connected to the public telephone network (8). A telephone exchange 7 is again drawn in the telephone network (8). A plurality of connection lines 8', 8", 8"' from other locations can be connected to this exchange 7. A telephone line 9' or 9" similarly runs from this exchange to the central point 2' or 2".

Two central points 2' or 2" are therefore provided in this modification of the system according to the invention for communication with terminals at remote locations and, as shown in Fig. 2, a central point 2' for the terminal A, and a central point 2" for the terminal B.

In this design of the system according to the invention, the gate circuit 4 no longer has a reception antenna. In order to enable transmission of the RF start signal from each central point 2' or 2" to the associated terminal (A or B), each central point 2' or 2" has its own RF transmitter 11' or 11" with associated RF transmission antenna 12' or 12". In this embodiment, the terminals A and B are each equipped with their own RF reception antenna 13' or 13" with a stage (not shown) connected downstream.

This embodiment of the system according to the invention is above all important if the terminals have totally different characteristics.

In order to define the idea, terminal A in Fig. 2 may, for example, be a central heating boiler, the status or operation of which needs to be known at the associated central point 2'. This is done, in a manner similar to that outlined in the discussion of Fig. 1, by transmitting a trigger or start signal from the central point 2' to the boiler (A), as a result of which the gate circuit 4 is opened via the internal communications line 3 and the retrieval of the required information and/or the control can begin. Here also, exchange of information takes place via the public telephone network (8).

In the manner previously outlined, it has become possible to communicate from one or more central points with a plurality of terminals at a plurality of remote locations, and specifically to interrogate them remotely in order to establish their status and operation, representing, inter alia, a breakthrough in preventive maintenance of terminals at remote locations.

## Claims

1. System for communicating with terminals (A, B) at remote locations (1), which uses the public telephone network (7, 8, 9) for communication between a central point (2) and any terminal at any location, **characterised in that**, in order to set up the connection between the central point and any terminal via the public telephone network, the terminal can be connected to the telephone network through an intermediate gate circuit (4) installed at the location, in which gate circuit not only coding for the location, but also the telephone number of the central point is preprogrammed, and which gate circuit is opened when a start signal is transmitted by wireless means (11, 12, 13) from the central point (2) to the location (1).

2. System according to Claim 1, **characterised in that** the system also has a facility in each terminal (A, B) for automatically reporting a fault in the terminal via the gate circuit (4) to the central point (2).

3. System according to Claim 1, **characterised in that** the gate circuit is provided with a reception antenna (13) to receive the start signal transmitted from the central point (2) by wireless means in order to open the gate circuit and, from the location, to set up the connection between the terminal and the central point via the public telephone network (7, 8, 9).

4. System according to one of Claims 1 to 3, **characterised in that** a plurality of terminals can be connected at the location to the input of the gate circuit via an internal communications line (3).

5. System according to one or more of the preceding claims, **characterised in that** the gate circuit is connected in parallel to the telephone or telephone exchange (6) at the location where the terminals are present.

6. System according to one or more of the preceding claims, **characterised in that** the terminals at other remote locations can be connected in a corresponding manner via the telephone network (8, 8', 8", 8"'; 7; 9', 9") to one or more central points (2', 2").

7. System according to Claim 6, **characterised in that** more central points (2', 2") are available, each with its own transmission installation (11', 11") and transmission antenna (12', 12"), and each of the terminals at any location is equipped with a reception antenna (13', 13") and associated connections in order to receive the start signal transmitted by wireless means from one of the aforementioned central points and intended for the terminal concerned and to instigate the opening of the gate circuit (4) at the location (1).
